# EUROPEAN PATENT APPLICATION

(11) **EP 2 149 298 A2**
(43) Date of publication of application: **03.02.2010**
(21) Application number: 09166364.1
(22) Date of filing: 24.07.2009
(51) Int. Cl.: A01K 61/00

(54) **Apparatus for monitoring moving aquatic animals, in particular fish, and method thereof**

(30) Priority: 28.07.2008 IT TO20080580
(71) Applicant: Dipartimento di Biologia Animale ed Ecologia, Ctr. di Competenza di Biodiversità Marina Com.Bio.Ma., 09126 Cagliari (IT)
(72) Inventor: Pelosio, Giorgio, 09129, Cagliari (IT); Del Giudice, Emilio Maria, 09131, Cagliari (IT)
(74) Representative: Dini, Roberto

(57) **Abstract**

The present invention relates to an apparatus (1) for monitoring moving aquatic animals (A), in particular fish, comprising:
- a tunnel (10) for restricting the lateral and vertical motion of said animals (A), said tunnel (10) comprising a top wall (11), a side wall (12), a bottom wall (13), and a transparent front wall (14),
- a container (20) extending from said transparent front wall (14) and containing an optical device (30), in particular a video camera, oriented towards said transparent front wall (14) and associated with a unit for processing a video signal of said optical device (30).

The invention is characterized in that said top wall (11), said side wall (12) and said bottom wall (13) comprise each a luminous panel (40).

## Description

The present invention relates to an apparatus for monitoring moving aquatic animals, in particular fish, according to the preamble of claim 1. The present invention also relates to a method for monitoring moving aquatic animals, in particular fish.

According to the state of the art, moving aquatic animals, in particular fish, are commonly monitored by using an optical device, in particular a video camera, immersed into the water containing the fish to be monitored.

However, the optical device can only view the submarine scenario in the adjacent area, especially when the water containing the fish to be monitored is turbid and rich in suspended particles; in fact, as the distance between the optical device and the animal to be monitored increases, water turbidity may even make the animal and the submarine scenario impossible to observe.

Moreover, in order to appropriately monitor a passing animal it is necessary a certain distance between the animal and the optical device. In particular, this is due to the fact that every optical device requires a more or less wide field of view, depending on the optical characteristics of the device itself and of the lenses thereof. As a consequence, it is necessary that said shooting field is located at a certain distance from the optical device, which distance may vary according to the optical characteristics of the device.

United States patent No. US5,222,458 relates to an apparatus for monitoring moving aquatic animals, in particular fish, comprising:
- a tunnel for restricting the lateral and vertical motion of said moving aquatic animals, said tunnel comprising a top wall, a side wall, a bottom wall, and a front wall;
- a container extending from said front wall and containing an optical device, in particular a video camera, oriented towards said front wall.

According to US patent No. US5,222,458, the top and front walls of the tunnel are made of a transparent material, whereas the side and bottom walls are associated with reflecting surfaces belonging to a reflection system.

In particular, said reflection system allows to reflect the light coming from one or more light sources arranged in proximity with the optical device, and to provide the optical device with a front view and a top view of a moving aquatic animal, in particular a fish, passing through said tunnel.

However, it has been observed that even the apparatus described in US patent No. US5,222,458 suffers from some drawbacks, since the light emitted by the light sources arranged in proximity with the optical device must necessarily go through the water contained in the tunnel for a plurality of times. As a matter of fact, said light emitted by the light sources crosses the water in the tunnel for a first time, is reflected by the reflection system, and then crosses the water in the tunnel for a second time before returning to the optical device.

This implies that the image received by the optical device is inevitably not very bright and has insufficient contrast. This is particularly apparent when the water in the tunnel is very turbid and has plenty of suspended particles.

The limited brightness and contrast of the image received by the optical device inevitably translates into less accuracy of the entire apparatus, which may also result in errors in the monitoring of moving aquatic animals.

A further drawback is due to the fact that, in the apparatus described in US patent No. US5,222,458, the container that houses the optical device is also filled with a liquid, typically water; this contributes to making the problems of insufficient brightness and contrast of the light and image received by the optical device significantly worse, since they also have to go through the liquid in the container.

Another drawback is that the light sources arranged near the optical device are typically provided in a form such that they may represent an annoying and disturbing element for the moving aquatic animals; as a consequence, said moving aquatic animals will try to avoid passing through the tunnel of the apparatus.

Yet another drawback of the apparatus described in US patent No. US5,222,458 is that, in order to ensure a minimum service life, the reflection system requires especially accurate and careful maintenance and cleaning of its components for the purpose of removing the vegetative substances present in the water constantly depositing thereon.

In this frame, it is the main object of the present invention to overcome the above-mentioned drawbacks by providing an apparatus and a method for monitoring moving aquatic animals which allow to appropriately monitor a passing animal even if the water containing the animals is turbid and rich in suspended particles.

It is another object of the present invention to provide an apparatus and a method for monitoring moving aquatic animals which allow to obtain optimal brightness and contrast of the image received by the optical device, so as to enhance the accuracy of the entire apparatus and avoid any errors in the monitoring of said moving aquatic animals.

It is a further object of the present invention to provide an apparatus and a method for monitoring moving aquatic animals conceived in a manner such that it comprises no light sources capable of annoying and disturbing the moving aquatic animals.

It is yet another object of the present invention to provide an apparatus and a method for monitoring moving aquatic animals which is so conceived as to not require any particularly accurate and careful maintenance of its various components.

These objects are achieved by the present invention through an apparatus and a method for monitoring moving aquatic animals, in particular fish, incorporating the features set out in the appended claims, which are intended as an integral part of the present description.

Further objects, features and advantages of the present invention will become apparent from the following detailed description and from the annexed drawings, which are supplied by way of non-limiting example, wherein:
- Figs. 1a and 1b are a sectional plan view and a sectional side view, respectively, of an apparatus for monitoring moving aquatic animals, in particular fish, according to the present invention;
- Fig. 2 is a perspective and partially sectional view of the apparatus for monitoring moving aquatic animals, in particular fish, according to the present invention;
- Fig. 3 is a perspective and partially sectional view of an element of the apparatus for monitoring moving aquatic animals, in particular fish, according to the present invention.

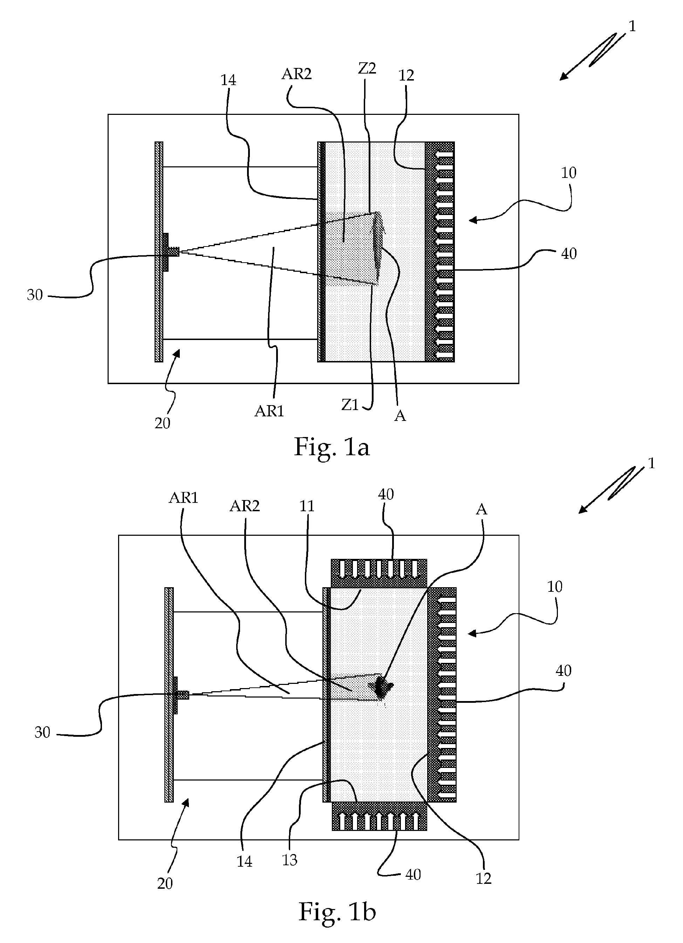

In Figs. 1a to 2, reference numeral 1 designates as a whole an apparatus for monitoring moving aquatic animals A, in particular fish, according to the present invention.

Said apparatus 1 comprises a tunnel 10 for restricting the lateral and vertical motion of said animals A, said tunnel 10 comprising a top wall 11, a side wall 12, a bottom wall 13, and a transparent front wall 14.

Said apparatus also comprises a container 20 extending from said transparent front wall 14 and containing an optical device 30, in particular a video camera, oriented towards said transparent front wall 14 and associated with a unit (not shown in the drawings) for processing a video signal of said optical device 30.

In accordance with the present invention, said top wall 11, said side wall 12 and said bottom wall 13 comprise each a luminous panel 40.

This provision allows to obtain a lighting of the transit scenario of animal A aimed at maximizing the brightness and contrast of the image received by optical device 30, thus enhancing the accuracy of entire apparatus 1 and avoiding any errors in the monitoring of said animals A.

In particular, animal A going through tunnel 10 is illuminated from side wall 12 located on the opposite side of animal A with respect to optical device 30, while the front illumination of animal A is conducted from top wall 11 and bottom wall 13; consequently, the image of animal A shot by optical device 30 is a black and white image wherein the silhouette of animal A is highlighted in black on a white background.

Said luminous panel 40 preferably operates at infrared frequencies between 800 nm and 850 nm, so as not to disturb animal A, in particular fish, which is not known to be sensitive to such frequency.

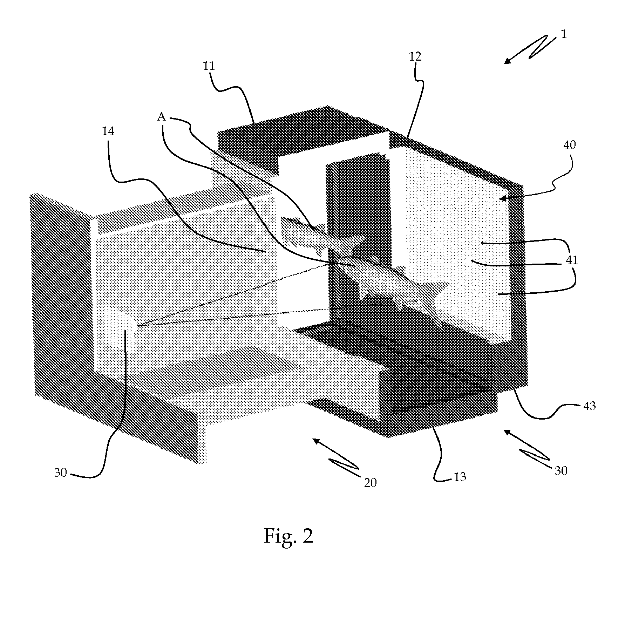

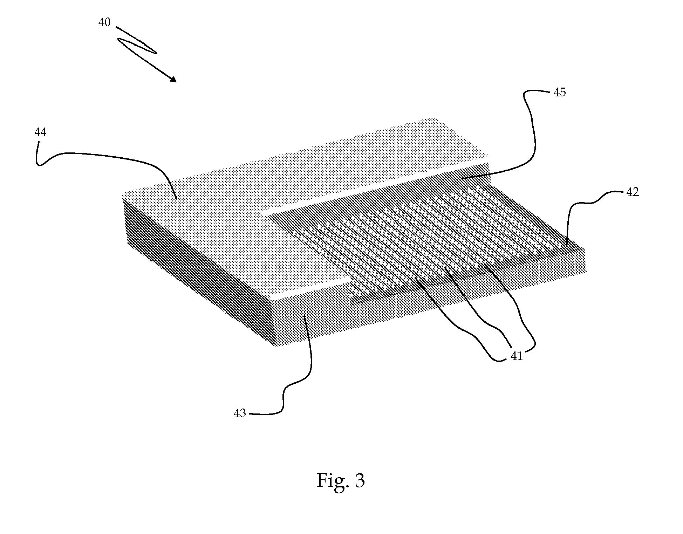

As can be seen in particular in Figs. 2 and 3, said luminous panel 40 comprises a plurality of LEDs 41 arranged on a printed circuit 42, preferably according to a matrix pattern.

Said plurality of LEDs 41 and said printed circuit 42 are located inside a housing 43 comprising a sheet 44 made of a semi-transparent material, in particular Plexiglas™.

Preferably, said housing 43 also comprises a semi-transparent gelatinous element 45, in particular made of silicone-based material, arranged between said plurality of LEDs 41 and said sheet 44.

Since LEDs 41 are a substantially punctiform light source, by using said sheet 44 and gelatinous element 45 it is possible to obtain a diffused and uniform illumination over the whole surface of luminous panel 40.

Furthermore, gelatinous element 45 allows to adequately and effectively insulate the electronics of the plurality of LEDs 41 when apparatus 1 is immersed into the water.

Said container 20 is preferably so constructed as to provide a watertight seal. This allows to keep free of any impurities the shooting area of optical device 30 which cannot be used for monitoring purposes because its physical dimensions are smaller than those of animal A to be monitored. It should be noted that in Figs. 1a and 1b said unusable shooting area is designated AR1, whereas the usable shooting area is designated AR2.

Apparatus 1 also comprises a closure system (not shown in the drawings) for preventing transit of animals A through tunnel 10; for example, said closure system may be activated when in the place to be monitored there are more animals A going out than coming in.

In a preferred embodiment of the present invention, apparatus 1 comprises an automatic calibration system adapted to calibrate the light emitted by each luminous panel 40 and to adjust it to the degree of sharpness and/or brightness of the video signal detected by said optical device 30.

A method for monitoring moving aquatic animals (A), in particular fish, according to the present invention will now be described.

In particular, said method utilizes an apparatus 1 comprising:
- a tunnel 10 for restricting the lateral and vertical motion of said animals A, said tunnel 10 comprising a top wall 11, a side wall 12, a bottom wall 13, and a transparent front wall 14;
- a container 20 extending from said transparent front wall 14 and containing an optical device 30, in particular a video camera, oriented towards said transparent front wall 14.

Said method comprises the following steps:
- obtaining lateral illumination of the animal A passing through said tunnel 10 by means of a luminous panel 40 associated with said side wall 12 located on the opposite side of animal A with respect to optical device 30;
- obtaining frontal illumination of animal A by means of respective luminous panels 40 associated with said top wall 11 and said bottom wall 13;
- obtaining a video signal of animal A by means of said optical device 30, in particular a black and white image wherein the silhouette of animal A is highlighted in black on a white background;
- processing said video signal of animal A by means of a processing unit associated with said optical device 30.

Furthermore, according to the present invention said monitoring method also comprises the steps of:
- associating, through said processing unit, a first label X (not shown in the drawings) with an animal A passing through a first zone Z1 of a usable shooting area AR2 of optical device 30;
- associating, through said processing unit, a second label Y (not shown in the drawings) with an animal A passing through a second zone Z2 of said usable shooting area AR2 of optical device 30;
- comparing, through said processing unit, said first X and said second Y labels so as to determine the direction of transit of said animal A in tunnel 10 and to count animals A being present in the place to be monitored.

Thanks to the above-described steps, the determination of the direction of transit in tunnel 10 and the counting of said animals A turn out to be particularly accurate.

In fact, when the processing unit first assigns to an animal A passing through tunnel 10 said first label X and then said second label Y, it is clear that animal A has passed through tunnel 10 in a first direction, e.g. an entrance direction.

On the contrary, when the processing unit first assigns to an animal A passing through tunnel 10 said second label Y and then said first label X, it is clear that animal A has passed through tunnel 10 in a second direction, e.g. an exit direction, opposite to said first direction.

In the event that the processing unit assigns the same label X or Y twice to an animal A passing through tunnel 10, this means that said animal A has passed twice through said first zone Z 1 or said second zone Z2; in such a case, animal A will not be considered and/or counted by the processing unit.

In a preferred embodiment of the present invention, said monitoring method comprises the activation of an automatic calibration system adapted to calibrate the light emitted by each luminous panel 40 depending on the degree of sharpness and/or brightness of the video signal detected by said optical device 30.

The advantages offered by an apparatus and a method for monitoring moving aquatic animals, in particular fish, according to the present invention are apparent from the above description.

In particular, such advantages are due to the fact that the light emitted by luminous panels 40 of top wall 11, side wall 12 and bottom wall 13 can return to optical device 30 without having to cross the water contained in tunnel 10 several times. This is particular beneficial when the water in tunnel 10 is very turbid and/or rich in suspended particles, since even in such conditions the image of animal A received by optical device 30 will have sufficient brightness and contrast, which will directly translate into a higher accuracy of entire apparatus 1 according to the present invention.

A further advantage is that watertight container 20 allows the unusable shooting area AR1 of optical device 30 to be kept free of impurities.

Another advantage of the apparatus and method according to the present invention is due to the fact that luminous panels 40 preferably operate at infrared frequencies between 800 nm and 850 nm, so that they cannot represent an annoying and disturbing element for animal A, in particular a fish.

Yet another advantage is that luminous panels 40, which comprise a plurality of LEDs 41, require no particularly accurate and careful maintenance.

The monitoring apparatus and method described herein by way of example may be subject to many possible variations without departing from the novelty spirit of the inventive idea; it is also clear that in the practical implementation of the invention the illustrated details may have different shapes or be replaced with other technically equivalent elements.

It can therefore be easily understood that the present invention is not limited to the above-described monitoring apparatus and method, but may be subject to many modifications, improvements or replacements of equivalent parts and elements without departing from the inventive idea, as clearly specified in the following claims.

## Claims

1. Apparatus (1) for monitoring moving aquatic animals(A), in particular fish, comprising:
- a tunnel (10) for restricting the lateral and vertical motion of said animals (A), said tunnel (10) comprising a top wall (11), a side wall (12), a bottom wall (13), and a transparent front wall (14),
- a container (20) extending from said transparent front wall (14) and containing an optical device (30), in particular a video camera, oriented towards said transparent front wall (14) and associated with a unit for processing a video signal of said optical device (30),
**characterized in that**
said top wall (11), said side wall (12) and said bottom wall (13) comprise each a luminous panel (40).

2. Apparatus (1) according to claim 1, **characterized in that** said luminous panel (40) preferably operates at infrared frequencies between 800 nm and 850 nm.

3. Apparatus (1) according to claim 1, **characterized in that** said luminous panel (40) comprises a plurality of LEDs (41) arranged on a printed circuit (42), preferably according to a matrix pattern.

4. Apparatus (1) according to claim 3, **characterized in that** said plurality of LEDs (41) and said printed circuit (42) are located inside a housing (43) comprising:
- a sheet (44) made of a semi-transparent plastic material, in particular plexiglass™;
- a semi-transparent gelatinous element (45), in particular made of silicone-based material, arranged between said plurality of LEDs (41) and said sheet (44).

5. Apparatus (1) according to claim 1, **characterized in that** said container (20) is assembled in a manner such that it provides a watertight seal.

6. Apparatus (1) according to claim 1, **characterized by** comprising a closure system adapted to prevent any animals (A) from entering the tunnel (10).

7. Apparatus (1) according to claim 1, **characterized by** comprising an automatic calibration system adapted to calibrate the light emitted by each luminous panel (40) and to adjust it to the degree of sharpness and/or brightness of the video signal detected by said optical device (30).

8. Method for monitoring moving aquatic animals (A), in particular fish, through an apparatus (1) comprising:
- a tunnel (10) for confining the lateral and vertical motion of said animals (A), said tunnel (10) comprising a top wall (11), a side wall (12), a bottom wall (13), and a transparent front wall (14);
- a container (20) extending from said transparent front wall (14) and containing an optical device (30), in particular a video camera, oriented towards said transparent front wall (14),
said method comprising the following steps:
- obtaining lateral illumination of the animal (A) passing through said tunnel (10) by means of a luminous panel (40) associated with said side wall (12) located on the opposite side of the animal (A) with respect to the optical device (30);
- obtaining frontal illumination of the animal (A) by means of respective luminous panels (40) associated with said top wall (11) and said bottom wall (13);
- obtaining a video signal of the animal (A) by means of said optical device (30), in particular a black and white image wherein the silhouette of the animal (A) is highlighted in dark on a light background;
- processing said video signal of the animal (A) by means of a processing unit associated with said optical device (30).

9. Method according to claim 8, **characterized by** comprising the following steps:
- associating, through said processing unit, a first label (X) with an animal (A) passing through a first zone (Z1) of a usable shooting area (AR2) of the optical device (30);
- associating, through said processing unit, a second label (Y) with an animal (A) passing through a second zone (Z2) of said usable shooting area (AR2) of the optical device (30);
- comparing, through said processing unit, said first (X) and said second (Y) labels so as to determine the direction of transit of said animal (A) in the tunnel (10) and to count the animals (A) being present in the place to be monitored.

10. Method according to claim 8, **characterized by** comprising a step of activating an automatic calibration system adapted to calibrate the light emitted by each luminous panel (40) in order to adjust it to the degree of sharpness and/or brightness of the video signal detected by said optical device (30).
